**Europäisches Patentamt**

**(19)** **European Patent Office**

**Office européen des brevets**

(11) Publication number : **0 449 336 B1**

# (12) EUROPEAN PATENT SPECIFICATION

(45) Date of publication of patent specification :
**08.03.95 Bulletin 95/10**

(51) Int. Cl.[6] : **H04N 1/387**

(21) Application number : **91108964.7**

(22) Date of filing : **10.08.88**

(54) **Method of and apparatus for setting original in image scanner.**

(30) Priority : **20.08.87 JP 205113/87**
        **28.09.87 JP 240932/87**

(43) Date of publication of application :
**02.10.91 Bulletin 91/40**

(60) Publication number of the earlier application in accordance with Art. 76 EPC : **0 303 960**

(45) Publication of the grant of the patent :
**08.03.95 Bulletin 95/10**

(84) Designated Contracting States :
**DE FR GB**

(56) References cited :
**EP-A- 0 206 307**
**GB-A- 2 160 669**
**GB-A- 2 168 567**
**US-A- 3 604 846**
**US-A- 4 733 304**

(73) Proprietor : **Dainippon Screen Mfg. Co., Ltd.**
**1-1, Tenjinkitamachi**
**Teranouchi-Agaru 4-chome**
**Horikawa-Dori**
**Kamikyo-ku Kyoto 602 (JP)**

(72) Inventor : **Yamamoto, Masahiro, Dainippon**
**Screen Mfg. Co., Ltd**
**1-1, Tenjinkitamachi,**
**Teranouchi-agaru 4-chome**
**Horikawa-dori, Kamikyo-ku, Kyoto (JP)**
Inventor : **Hirosawa, Makoto, Dainippon**
**Screen Mfg. Co., Ltd**
**1-1, Tenjinkitamachi,**
**Teranouchi-agaru 4-chome**
**Horikawa-dori, Kamikyo-ku, Kyoto (JP)**

(74) Representative : **Goddar, Heinz J., Dr. et al**
**FORRESTER & BOEHMERT**
**Franz-Joseph-Strasse 38**
**D-80801 München (DE)**

## Description

The present invention relates to a method of setting an original in an image scanner for reading an image of a desired area of an original through an image process and an image scanning system for reading an image of an original.

EP-A-0206307 (D1) discloses a system for pasting up composed pages for scanning on a drum type scanner.

In a process scanner system, the image of an original is read with an image scanner for each scanning line, thereby to obtain an image data. The image data is subjected to an image data processing, and then delivered to an exposure control unit employed for controlling an exposure beam supplied to a photosensitive material. Therefor, the image scanning process should be carried out under two important requirements, one of which is that the original should be properly set in the image scanner, and the other is that various parameters or "scan data" required in the scanning and the image data processing should be set at their respective optimum values so as to obtain a desired reproduced image.

With respect to the former requirement, a conventional technique is so conducted that a desired area is clipped from the original and it is pasted on a layout sheet or a transparent sheet such as a transparent resin film. The sheet is then set on an image scanner. In another conventional technique, the whole of the original is pasted on a layout sheet so that the desired area of the original is located in a trimming region previously indicated on the layout sheet. The layout sheet is set in the image scanner, and then the image of the desired area is read for each scanning line.

In the conventional techniques, the layout sheet or the transparent sheet must be thrown away after use, and it is uneconomical. Another disadvantage is that careful handling of the original is required, since the original is used not only in the set on the image reader but also in a layout process on a desitizer, and it is sometimes damaged due to a careless handling thereof.

On the other hand, in order to meet the latter requirement in the parameter setting, a conventional technique is so conducted that optimum values of the parameters such as optical densities of highlight and shadow points are manually set in the image scanner. Accordingly, the parameter values with respect to an original are sometimes mistaken for those to another original. To prevent such a mistake, the parameter values may be transmitted from a setup apparatus to the image scanner with on-line transmission. However, such an on-line system is complicated and high-priced.

Accordingly, an object of the present invention is to provide a method for setting an original in an image scanner which is attained in a high efficiency and at a low cost.

Another object of the present invention is to prevent an original from being damaged through a careless handling thereof.

Further another object of the present invention is to set a scan data in an image scanner without mistaking the scan data for that to another original.

Further another object is to provide an original holder suitable for holding an original.

Yet another object of the present invention is to provide a scan table capable of accepting an original holder an having a function for changing the direction of the original holder.

According to the present invention, the method comprises the features of claim 1. An image scanning system for reading an image of an original according to the invention comprises the features of claim 4.

Preferred embodiments of the invention are subject matter of subclaims 2 and 3 and 5 to 7 respectively.

These and other objects, features, aspects and advantages of the present invention will become more apparent from the following detailed description of the present invention when taken in conjunction with the accompanying drawings.

Fig. 1 is a schematic diagram showing an image scanner and pheripheral devices according to an preferred embodiment of the present invention,

Fig. 2 is a plane view of an original holder,

Fig. 3 is a diagram showing various coordinates on a digitizer,

Fig. 4 is a flow chart showing a process of obtaining a coordinate data and an angle data,

Fig. 5A and Fig. 5B are schematic diagrams showing a relationship between the original holder and an image projected on a layout sheet,

Fig. 6 is a perspective view of a scan table,

Fig. 7 is a flow chart showing a process of setting the original holder in the scan table,

Fig. 8 through Fig. 10 are coordinate diagrams showing coordinates on the scan table,

Fig. 11 is a perspective view of an original holder according to another preferred embodiment of the present invention,

Fig. 12 is a block diagram showing the image scanner and pheripheral apparatuses,

Fig. 13 is a diagram showing the state where a scan data is read from a memory provided in the original holder,

Fig. 14 is a partial view of an original holder according to further another embodiment of the present invention,

Fig. 15 is a diagram showing a magnetic head provided in the scan table, and

Fig. 16 and Fig. 17 are diagrams showing an application of the present invention to a drum type scanner.

DESCRIPTION OF THE PREFERRED EMBODIMENTS

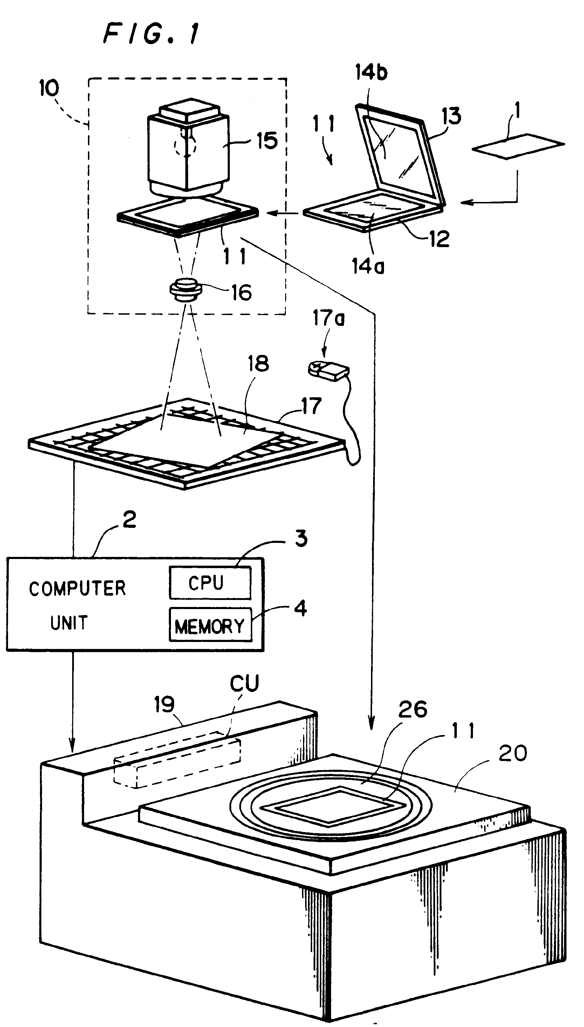

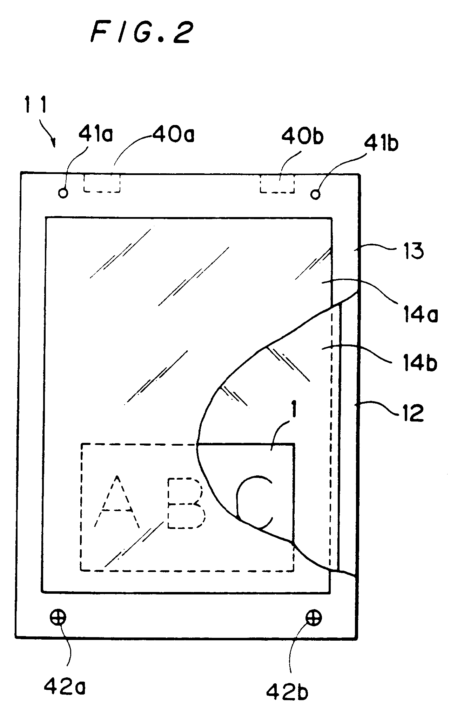

Fig. 1 is a schematic view of an image scanner 19 employed in a process scanner system of a flat bed type, to which a preferred embodiment of the present invention is applied. An original holder 11 for holding an original 1 has a lower frame 12 and an upper frame 13 connected with each other through hinges 40a and 40b (see Fig. 2) provided between the respective edges of the frames 12 and 13, so that the frames 12 and 13 can relatively rotate around the hinge axis. In the respective windows surrounded by the frames 12 and 13, transparent plates 14a and 14b such as glass plates are mounted, respectively. The original 1 is placed on the transparent plate 14a in an arbitrary direction, and the frames 12 and 13 are closed, whereby the original 11 is hold between the transparent plates 14a and 14b. As shown in Fig. 2, a pair of holes 41a and 41b is formed through the frames 12 and 13, which are used for adjusting the original holder 11 to a rotary table 26 shown in Fig. 1, as will be described later. In the adjacent corners of the upper frame 12, small windows 42a and 42b are formed, respectively, and small transparent disks are mounted in the windows 42a and 42b, respectively. A reference mark such as a cross mark is provided in each of the transparent disks 42a and 42b. Small windows alinged with the windows 42a and 42b respectively are formed in the lower frame 12, although they are not shown in Fig. 2.

The original holder 11 holding the original 1 is carried to a projector 10 (Fig. 1) having a light source head 15 and a lens 16. When the original holder 11 is loaded between the light source head 15 and the lens 16 and the light source in the light source head 15 is turned on, the image of the original 1 is projected on a layout sheet 18 placed on a digitizer 17. The reference marks in the transparent discs 42a and 42b are also projected on the layout sheet 18. In order to obtain a clear image on the layout sheet 18, the light source is so constructed as to emit a light enough to penetrate through the original 1. If the original 1 is a transparent film original, the light may be relatively weak.

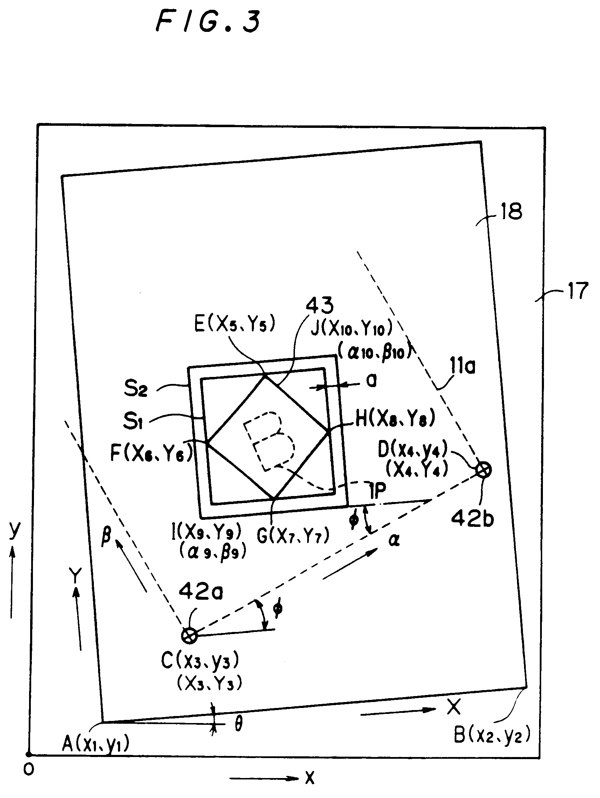

The layout sheet 18 is not fixed on the digitizer 18, so that the layout sheet 18 can be moved on the digitizer 17. On the layout sheet 18, a closed line or curve expressing a trimming frame 43 shown in Fig. 3 is previously drawn. The trimming frame 43 indicates an image area to be extracted from the original 1, and it is previously determined according to a layout plan of a reproduced image.

The position of the layout sheet 18 and the value of the magnification factor in the image projection is so adjusted that the image of the desired area on the original 1 is magnified or reduced to fit the region indicated by the trimming frame 43 on the layout sheet 18. Change of the magnification factor can be attained through adjustment of the distance between the original holder 11 and the lens 16, and that between the lens 16 and the digitizer 17. Preferably, the projector 15 is an auto-focus projector in which the original holder 11 and the lens 16 move together to maintain an image forming position regardless of the value of the magnification factor, and the current value of the magnification factor is automatically outputted as a magnification factor data.

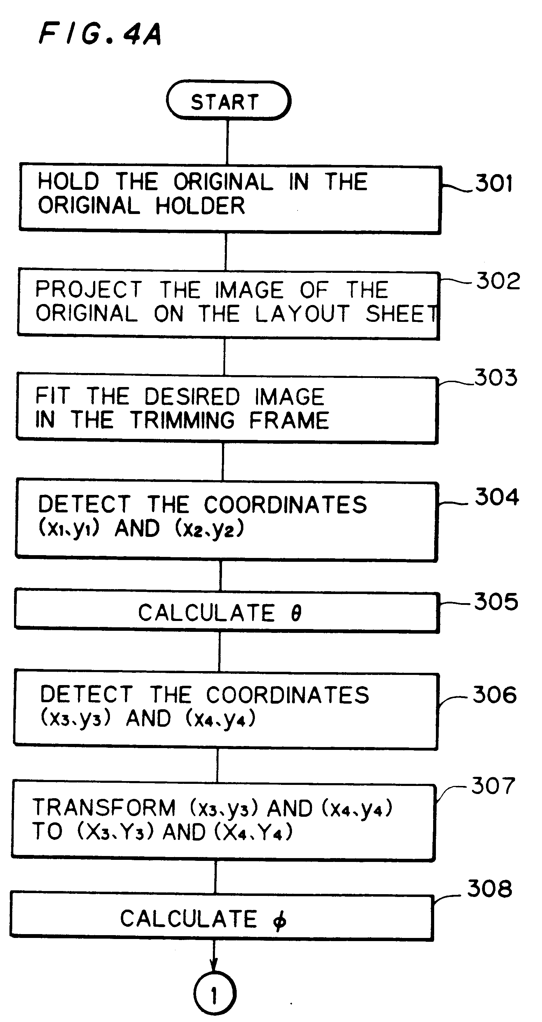

Fig. 3 shows the state where the image of the original 1 is projected on the layout sheet 18, and the image 1P in the desired area on the original 1 is fitted in the trimming frame 43. Although the image of the original 11 is illustrated as the characters "A", "B" and "C" in Fig. 1 through Fig. 3, for convenience of illustration, the image is usually a photographic image in practice. The process described above is also indicated in Fig. 4A as the process steps 301-303.

For the following description, three of two dimensional Cartesian coordinate systems are defined as follows:

$(x,y)$: a coordinate system defined on the digitizer 17,

$(X,Y)$: a coordinate system defined on the layout sheet 18,

$(\alpha,\beta)$: a coordinate system defined on the imaginary profile 11a of the original holder 11 on the layout sheet 18.

These coordinate systems are hereinafter referred as "x-y system", "X-Y system", and "$\alpha$-$\beta$ system", respectively.

With the digitizer 17 and a digitizer tablet 17a shown in Fig. 1, the coordinates of an apex $\underline{A}$ (Fig. 3) of the layout sheet 18 and those of a point $\underline{B}$ arbitrarily selected on the X-axis extending along the lower edge of the layout sheet 18 are detected in x-y system. When the detected coordinates of the points $\underline{A}$ and $\underline{B}$ are expessed as $(x_1, y_1)$ and $(x_2, y_2)$, respectively, the incline angle $\theta$ of the layout sheet 18 from the digitizer 17 is obtained

3

through the following expressions (1a)-(1c). This is also shown in Fig. 4A, as the process steps 304 and 305.

$$\theta = \tan^{-1}\{(y_2 - y_1)/(x_2 - x_1)\}, \text{ for } x_2 = x_1, \quad (1a)$$

$$\theta = \frac{\pi}{2}, \text{ for } x_2 = x_1 \text{ and } y_2 > y_1, \quad (1b)$$

$$\theta = -\frac{\pi}{2}, \text{ for } x_2 = x_1 \text{ and } y_2 < y_1. \quad (1c)$$

In order to calculate the respective values of the angle $\theta$ and other parameters described later, the process scanner shown in Fig.1 is provided with a computer unit 2 having a CPU 3 and a memory 4, which is electrically connected with the digitizer 17.

Using the value of the angle $\theta$ obtained through the expressions (1a)-(1c), the following coordinate transformation formulas (2a) and (2b) for transforming coordinates in x-y system to those in X-Y system is obtained, and data expressing the formulas (2a) and (2b) is stored in the memory 3.

$$X = (x - x_1)\cos\theta + (y - y_1)\sin\theta \quad (2a)$$
$$Y = -(x - x_1)\sin\theta + (y - y_1)\cos\theta \quad (2b)$$

Then, the coordinates of the projected reference marks $\underline{C}$ and $\underline{D}$ in the projected windows 42a and 42b are detected in the x-y system, as $(x_3, y_3)$ and $(x_4, y_4)$, respectively. These coordinates are transformed to the X-Y system through the formulas (2a) and (2b), to obtain $(X_3, Y_3)$ and $(X_4, Y_4)$. The incline angle $\phi$ of the imaginary profile 11a from the layout sheet 18 is obtained as follows (the process steps 306-308):

$$\phi = \tan^{-1}\{(Y_4 - Y_3)/(X_4 - X)\}, \text{ for } X = X, \quad (3a)$$

$$\phi = \frac{\pi}{2}, \text{ for } X_3 = X_4 \text{ and } Y_4 \text{ and } Y_4 > Y_3, \quad (3b)$$

$$\phi = -\frac{\pi}{2}, \text{ for } X_3 = X_4 \text{ and } Y_4 \text{ and } Y_4 < Y_3. \quad (3c)$$

In the next process step, positions of the trimming frame 43 drawn on the layout sheet 18 are detected. when the trimming frame 43 has a shape of a rectangle FEGH, for example, the respective positions of the apexes $\underline{F}$, $\underline{E}$, $\underline{G}$ and $\underline{H}$ are detected in x-y system with the digitizer 17 and the tablet 17a in the x-y system, and then transformed to the X-Y system, to obtain $E(X_5, Y_5)$, $F(X_6, Y_6)$, $G(X_7, Y_7)$ and $H(X_8, Y_8)$.

When the original 1 is subjected to the image reading process with the image scanner 19 after the setting process is completed, the image in the trimming frame 43 should be extracted from the image of the original 1. The image scanner 19 is so constructed as to read the image for each scanning line, and the layout of a reproduced image on a record medium such as a photosensitive film is indicated by the image layout on the layout sheet 18. Therefore, in the image reading process which will be described later, the original 1 is set in the image scanner 19 under the condition where the respective directions of X and Y are parallel with the main scanning direction and the subscanning direction, respectively. Accordingly, a scan region on the original 1 to be scanned with the image scanner 19 should have a shape of a rectangle having lateral sides parallel with the X-direction and vertical sides parallel with the Y-direction.

With respect to the image 1P shown in Fig.3, the scan region thereof may be specified as a rectangular region $S_1$ circumscribing the trimming frame 43 and having lateral sides parallel with the X-direction and the vertical sides parallel with the Y-direction. Alternatively, another rectangular region $S_2$ surrounding the rectangular region $S_1$ with a margin $\underline{a}$ may be employed as the scanning region. The value of the margin $\underline{a}$ may be previously determined to be stored in the memory 4 as a fixed value, or may be arbitrarily determined and inputted by an operator for each original. In the preferred embodiment, the latter rectangular region $S_2$ is employed, rather than the former $S_1$.

The respective coordinates $(X_9, Y_9)$ and $(X_{10}, Y_{10})$ of the left-bottom apex $\underline{I}$ and the right-top apex $\underline{J}$ in the rectangle $S_2$ are obtained through the expressions (4a) -(4d).

$$X_9 = \min(X_5, X_6, X_7, X_5) - a \quad (4a)$$
$$Y_9 = \min(Y_5, Y_6, Y_7, Y_8) - a \quad (4b)$$
$$X_{10} = \min(X_5, X_6, X_7, X_5) + a \quad (4c)$$
$$Y_{10} = \min(Y_5, Y_6, Y_7, Y_8) + a \quad (4d)$$

where the symbols "min" and "max" indicate the minimum and maximum values in the parenthesis, respectively.

The coordinates $(X_9, Y_9)$ and $(X_{10}, Y_{10})$ in the X-Y system are transformed to the coordinates $(\alpha_9, \beta_9)$ and $(\alpha_{10}, \beta_{10})$, respectively, through the coordinate transformation formulas (5a) and (5b).

$$\alpha = (X - X_3)\cos\phi + (Y - Y_3)\sin\phi \quad (5a)$$
$$\beta = -(X - X_3)\sin\phi + (Y - Y_3)\cos\phi \quad (5b)$$

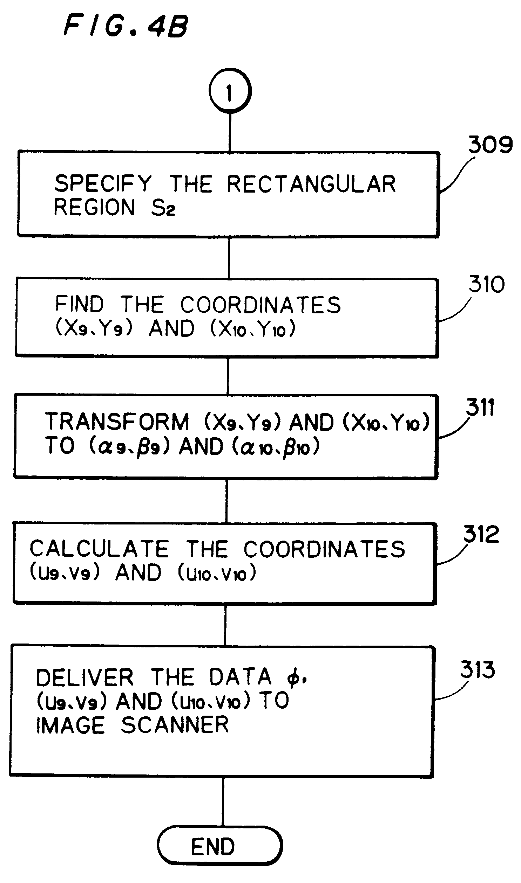

These steps are shown in Fig. 4B, as the process steps 309-311. Note that the angle $\phi$ is just an incline angle at which the rectangular region $S_2$ is inclined from a reference line interconnecting the reference marks in the projected windows 42a and 42b.

Such a rectangle circumscribing a trimming frame can be obtained even when the shape of the trimming frame is not a rectangle but another shape such as a circle, an ellipse, and a polygon other than a rectangle.

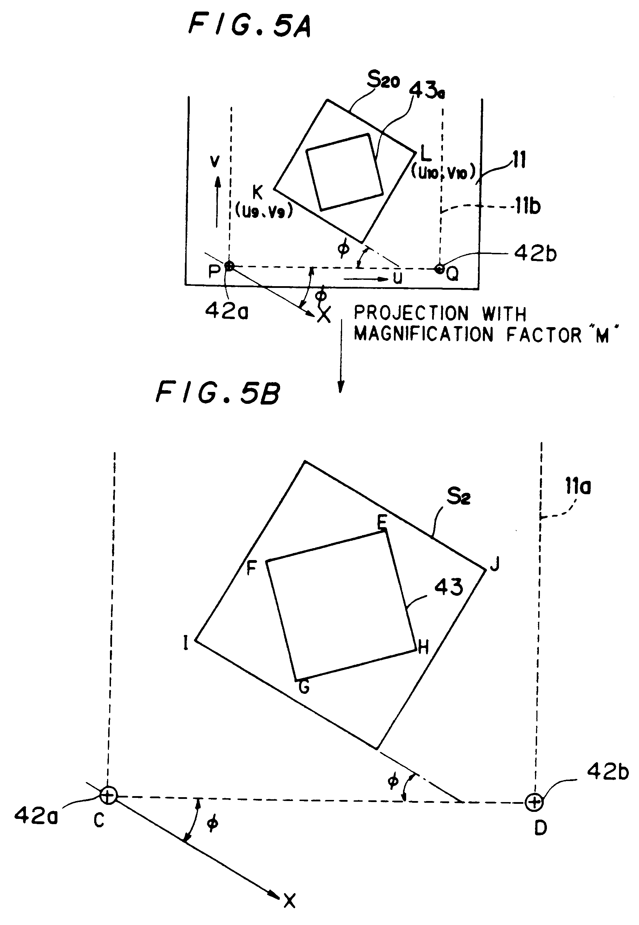

Fig.5A is a partial plane view of the original holder 11 in which an imaginary profile line 11b corresponding to the imaginary profile line 11a on the layout sheet 18 is illustrated. The imaginary profile line 11b is defined as an imaginary rectangle whose neighbouring two apexes $\underline{P}$ and $\underline{Q}$ coincide with the reference marks in the windows 42a and 42b, respectively. Although a trimming frame 43a and a rectangular region $S_{20}$ corresponding to the trimming frame 43 and the rectangular region $S_2$, respectively, are illustrated in Fig.5A, these are not actual lines on the original holder 11, but imaginary lines indicated for reference.

When the magnification factor in the projector 15 has a value $\underline{M}$, all of the images in the original holder 11 are magnified by the magnification factor $\underline{M}$ on the layout sheet 18. Fig.5B is a partial diagram showing the region on the layout sheet 18 corresponding to that shown in Fig.5A. The apexes $\underline{C}$ and $\underline{D}$ correspond to the apexes $\underline{P}$ and $\underline{Q}$, respectively, and the apexes $\underline{I}$ and $\underline{J}$ of the rectangle $S_2$ correspond to the apexes $\underline{K}$ and $\underline{L}$, respectively. The ratio of the image size of Fig.5A to that of Fig.5B has a value equal to the magnification factor $\underline{M}$.

When another two dimensional Cartesian coordinate system (u, v) is defined on the original holder 11, the respective coordinates $(u_9, v_9)$ and $(u_{10}, v_{10})$ of the apexes $\underline{K}$ and $\underline{L}$ are obtained through the expressions (a process step 312 in Fig. 4B):

$$u_9 = \alpha_9 / M \quad (6a)$$
$$v_9 = \beta_9 / M \quad (6b)$$
$$u_{10} = \alpha_{10} / M \quad (6c)$$
$$v_{10} = \beta_{10} / M \quad (6d)$$

As will be clearly understood later, the rectangular region $S_{20}$ corresponds to the scan region on the original 1.

The data expressing the respective values of the parameters $\phi$, $(u_9, v_9)$ and $(u_{10}, v_{10})$ are stored in the memory 4 as reference data, and delivered to the image scanner 19 (the process step 313). The delivery of the reference data may be attained through on-line communication, or off-line communication with a memory such as a floppy disc, a magnetic tape or the like. Alternatively, the data may be printed on a data sheet, with which the operator inputs the data to the image scanner 19 through his manual operation.

In response to the delivery of the reference data, a control unit CU (Fig.1) provided in the image scanner 19 operates to set the respective values of the angle $\phi$ and the coordinates $(u_9, v_9)$ and $(u_{10}, v_{10})$ therein. The data with respect to the magnification factor $\underline{M}$ delivered from the projector 15 is also set in the control unit CU as one of the reference data. The control unit CU has a microcomputer, and operates according to a program previously stored therein.

It should be noted that the rectangular region $S_{20}$ is inclined from a reference line interconnecting the reference marks in the windows 42a and 42b, at the angle $\phi$.

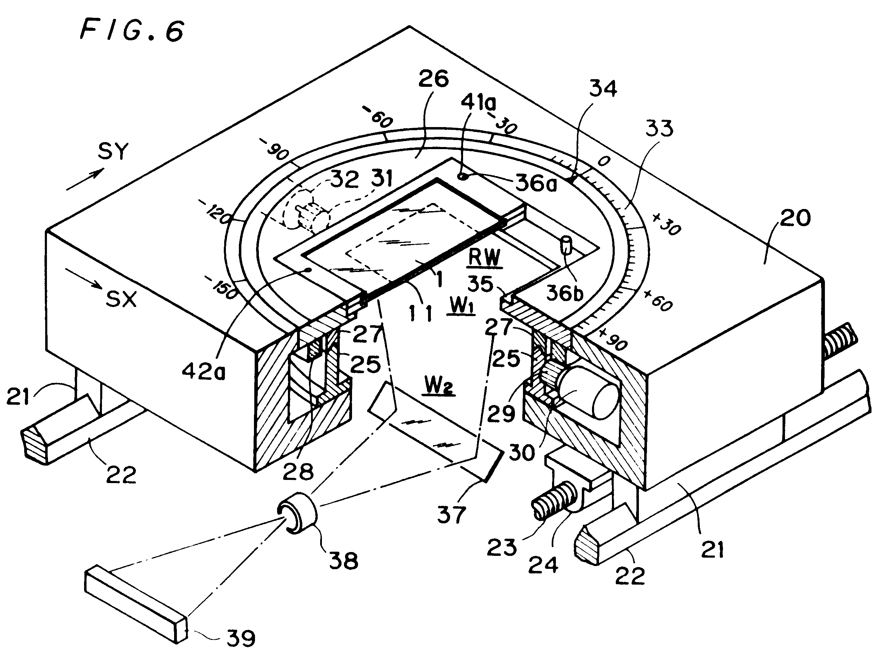

Fig.6 is a perspective view of a scan table 20 provided in the top surface of the image scanner 19, in which a part of the table 20 is broken away for convenience of illustration. The scan table 20 is shaped as a hollow box having circular windows $W_1$ and $W_2$ on the upper and lower surfaces thereof. A pair of sliders 21 is provided on the lower surface of the scan table 20, and is fitted with a pair of parallel guide rails 22 mounded in the image scanner 19, whereby the scan table 20 is supported with the guide rails 22.

In parallel with the guide rails 22, a screw rod 23 connected to a drive mortor (not shown) is provided. A nut 24 is fixed on the lower surface of the scan table 20, and the screw rod 23 is inserted therein. When the drive motor is enabled to rotate the screw rod 23, the scan table 20 slides the sliders 22 along the longitudinal direction of the sliders 22.

On the inner edge of the scan table 20, a circular guide member 25 is provided, thereby to support a rotary table 26 through a circular slider 27 fixed to the lower surface of the rotary table 26. The rotary table 26 is a disc having a rectangular window RW into which the original holder 11 can be inserted. The rotary table 26 is inserted into the upper window $W_1$ of the scan table 20. A circular rack 28 is also fixed to the lower surface of the rotary table 26 concentrically with the circular slider 27. In place of the circular rack 28, three or more of rack pieces may be provided to align along the circular slider 27 at regular intervals.

In the scan table 20, a motor 30 for rotating a gear 29 is provided. The gear 29 is fitted with the circular rack 28, and therefore, the rotary table 26 can rotate in horizontal plane with the gear drive. The rotary table 26 may rotate within an angle range $\pm 90°$ with respect to a reference position, or alternatively, it may rotate within a full angle range, i.e., 360°.

A rotary encoder 32 having a gear 31 is also provided in the scan table 20, the gear 31 being fitted with the circular gear 28. When the rotary table 26 rotates, the rotary encoder 32 generates an electric pulse upon every rotation of the rotary table 26 by a small constant angle. A rotation angle detector other than the rotary encoder 32 may be employed in place of the rotary encoder 32. Preferably, the rotation angle detector is op-

EP 0 449 336 B1

erable to detect the rotation angle at a high accuracy.

Angle indexes 33 are marked around the window $W_1$ on the upper surface of the scan table 20, while an indication mark 34 is provided at a position in the edge of the rotary table 26. In the rectangular window RW provided at the central area of the rotary table 26, a step member 35 is formed along the inner pheripheral edge of the window $W_1$. A pair of pins 36a and 36b are upwardly provided on the neighbouring corners on the step member 35, which are inseted into the holes 41a and 41b (Fig.2) when the original holder 11 is set into the rectangular window RW. With the combination of the pins 36a and 36b and the holes 41a and 41b, the position of the original holder 11 in the rectangular window RW is precisely restricted. The small windows 42a and 42b shown in Fig.2 are so positioned in the original holder 11 that the windows 42 and 42b are not covered with the step member 35 when the original holder 11 is set in the rectangular window RW.

The image scanner 19 has a photoelectric scan mechanism consisting of a mirror 37, a lens 38, a linear image sensor 39, and others. The photoelectric scan mechanism is positioned under the scan table 20. A light source (not shown) is provided above or below the scan table 20, to emit a light to the window $W_1$. In an image reading operation which will be described later, a line image in the original 1 is projected on the linear image sensor 39 through the mirror 37 and the lens 38. The linear image senior 39 is a linear CCD array, for example, and serially converts the line image projected thereon into an electric image signal, to achieve a main scanning of the image of the original 1. The scan table 20 is linearly moved along the direction SY through a rotation of the screw rod 23, to achieve a subscanning. Accordingly, the direction SX parallel to the longitudinal direction of the linear image sensor 39 is a main scanning direction, and the direction SY parallel to the screw rod 23 is a subscanning direction, in the image scanning. Through the combination of the main scanning and the subscanning, the two dimensional image of the original 1 is photoelectrically read.

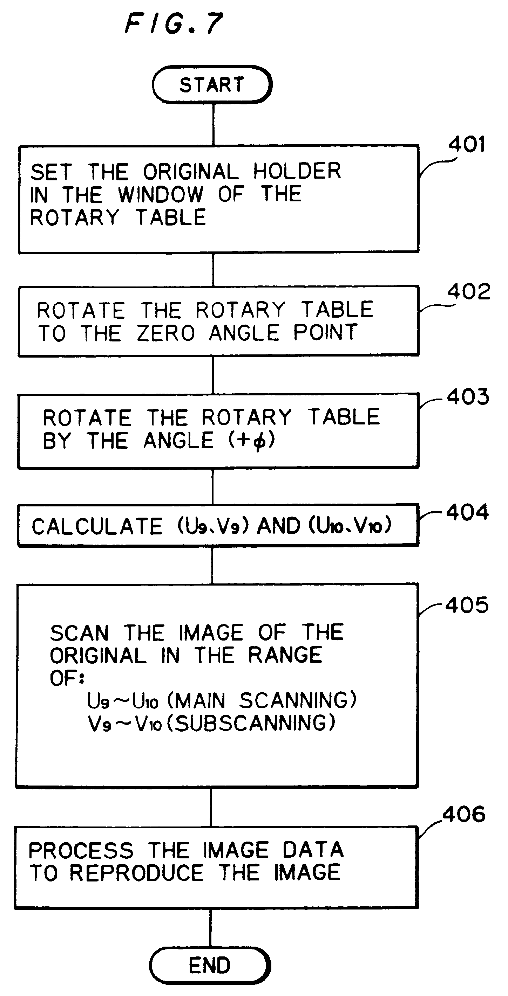

The operation for setting the original holder 11 having the original 1 in the image scanner 19 is conducted as follows: After the setting operation of the reference data in the control unit CU, the original holder 11 holding the original 1 is set in the rectangular window RW in the rotary table 26 (the process step 401 in Fig. 7), without changing the holding position of the original 1 in the original holder 11. The positional adjustment between the original holder 11 and the rectangular window RW is achieved through the combination of the pins 36a and 36b and the holes 41a and 41b.

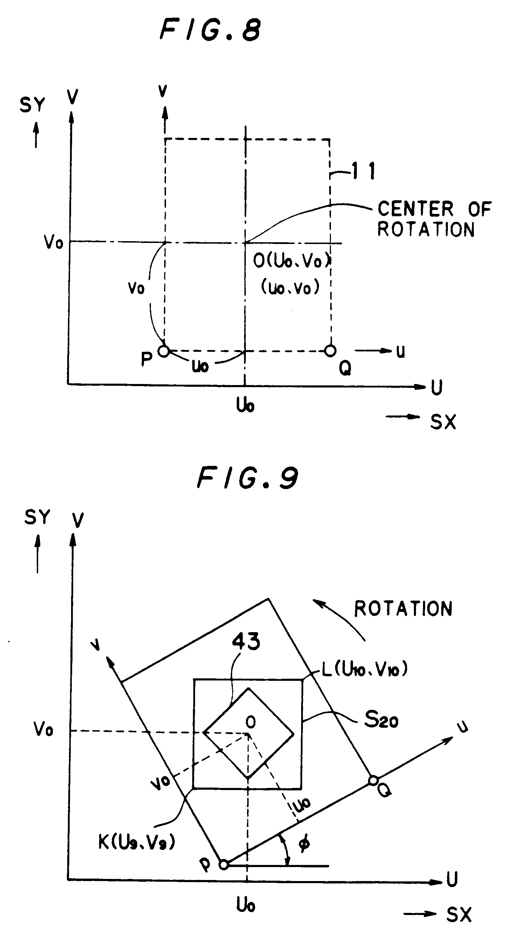

Then, the rotary table 26 is so rotated that the indication mark 34 indicates the zero angle point or the "0" mark in the indexes 33 (the process step 402). A two dimensional coordinate system (U, V) shown in Fig.8 is so defined on the image scanner 19 that the U-axis and the V-axis are parallel to the main scanning direction SX and the subscanning direction SY, respectively. The center $\underline{O}$ of the rotation of the rotary table 26 has coordinates $(U_0, V_0)$ in the U-V system, and has coordinates $(u_0, v_0)$ in the u-v system defined on the original holder 11. The values of these coordinates can be previously found, since they are constant values regardless of the position of the original 1 in the original holder 11. These values are previously stored in a memory included in the control unit CU.

After adjusting the original holder 11 to the zero angle point, the rotary table 26 is rotated by the angle $(+\phi)$ through the motor drive with the motor 30 (the process step 403). The rotation is conducted under the control with the control unit CU, where the control unit CU monitors the output signal of the rotary encoder 32, and when the output signal indicates that the rotary table 26 is rotated by the angle $(+\phi)$, the motor drive is stopped.

Fig. 9 shows the state where the rotation of the rotary table 11 by $(+\phi)$ is completed. Note that the angle $\phi$ is defined as an angle formed by the X-axis (Fig. 5A) and the u-axis, and the X-axis corresponds to the bottom edge of the layout sheet 18. Therefore, when the original 1 held in the original holder 11 is rotated by $(+\phi)$ according to the rotation of the rotary table 26, the angular relationship between the original 1 and the the main scanning direction SX becomes identical to that between the original 1 and the bottom edge of the layout sheet 18.

On the other hand, the rectangular region $S_2$ in Fig. 3 is so defined that its top and bottom sides are parallel to the X-direction, and therefore, the rectangular region $S_{20}$ in Fig. 5A corresponding to the region $S_2$ have top and bottom sides parallel to the X-axis. Further, the main scanning direction SX and the U-axis in the image reading process corespond to the X-axis in the layout sheet 18 which indicates a reproduced image layout. Therefore, in the state shown in Fig. 9, the top and bottom sides of the rectangular region $S_{20}$ are parallel to the U-axis and the main scanning direction SX, and the right and left sides of the same are parallel to the V-axis and the subscanning direction SY.

In the next process step 404, which may be prior to the steps 401-403, respective coordinates $(u_9, v_9)$ and $(u_{10}, v_{10})$ of the points $\underline{K}$ and $\underline{L}$ in the u-v system are transformed to coordinates $(U_9, V_9)$ and $(U_{10}, V_{10})$ in the U-V system, respectively, through the coordinate transformation formulas (7a) and (7b).

$$U = (u - u_0) \cos\phi - (v - v_0) \sin\phi + U_0 \quad (1a)$$
$$V = (u - u_0) \sin\phi + (v - v_0) \cos\phi + V_0 \quad (1b)$$

6

The values of $U_9$ and $U_{10}$ define the main scanning range of the rectangular region or the scan region $S_{20}$, and the values $V_9$ and $V_{10}$ define the subscanning range of the scan region $S_{20}$. The transformation according to the formulas (7a) and (7b) are performed in the control unit CU, and the coordinate values thus obtained are stored in the memory provided in the control unit CU, whereby the original setting process according to an preferred embodiment of the present invention is completed.

After setting the original 1 in the image scanner 19, the photoelectric scan mechanism is enabled so that the image in the scan region $S_{20}$ is read for each scanning line (the process step 405). The range of the reading is restricted with the coordinate values $U_9$, $U_{10}$, $V_9$ and $V_{10}$, where the main scanning is attained in the range from $U_9$ to $U_{10}$, while the subscanning range is that from $V_9$ to $V_{10}$. The image data obtained in the image scanner 19 is processed in the processing circuits (not shown), to be delivered to an exposure unit for exposing a photosensitive film for each scanning line according to the processed image data (the process step 406). As a result, a reproduced image in accordance with the image layout on the layout sheet 18 is obtained on the photosensitive film. The image in the scan region $S_{20}$ is recorded on the film at the desired incline angle $\phi$ from the bottom edge of the film. The preferred embodiment described above may be modified as follows:

Although the center of the scan region $S_{20}$ in the original 1 coincidents with the center $\underline{O}$ of the rotation of the rotary table 26 and that of the original holder 11 in the example shown in Fig. 9, they may be different with each other, and the above described process can be also applied to such a case. When it is desired that the center of the scan region $S_{20}$ is always located at the point $(U_0, V_0)$ which is registered in the control unit as the rotation center, the scan table 20 is so constructed as to be translationally moved on the image scanner 19 in the U-direction and/or V-direction with a translational drive mechanism such as a linear actuator. The value of the translational movement or displacement required for bringing the center of the scan region $S_{20}$ to the point $(U_0, V_0)$ is estimeted as:

$$U_0 - (U_9 + U_{10})/2, \text{ for the U - direction} \quad (8a)$$
$$V_0 - (V_9 + V_{10})/2, \text{ for the V - direction} \quad (8b)$$

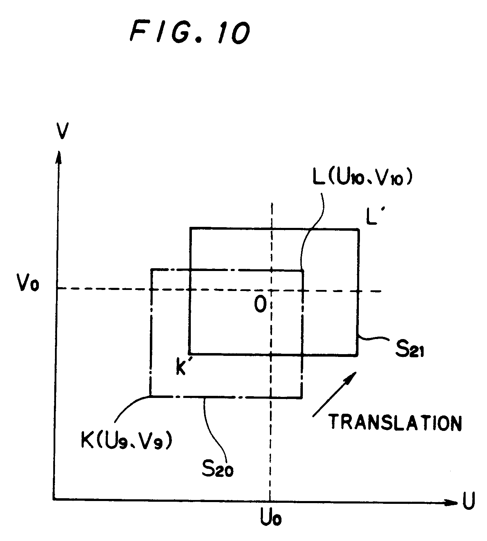

Through the movement, the scan region $S_{20}$ shown in Fig. 10 is displaced to the region $S_{20}$ whose center coincidents with the point $(U_0, V_0)$ corresponding to the registered rotation center $\underline{O}$, and apexes $\underline{K}$ and $\underline{L}$ are moved to the points $\underline{K}'$ and $\underline{L}'$, respectively, so that the center of the scan region $S_{20}$ is moved to the registered rotation center. Note that the registered rotation center $(U_0, V_0)$ is not the real rotation center after the scan region $S_{20}$ is translated, but the initial rotation center before the translation, since the real rotation center is also translated together with the scan region $S_{20}$.

The motor 30 and the rotary encoder 32 may be omitted in the scan table 20. In such a case, the rotary table 26 is manually rotated by the angle $\phi$ while observing the indication mark 34 and the indexes 33, to adjust the directions of the region $S_{20}$ to the scanning directions.

The reference marks in the original holder 11 may be provided on the transparent plate 14a or 14b rather than in the windows 42a and 42b. Further, the value of the magnification fastor $\underline{M}$ may be obtained through the process where the distance between the reference marks projected on the layout sheet 18 is detected by the digitizer 17, and a ratio of the detected distance to the real distance between the reference marks on the original holder 11 is calculated, since the ratio corresponds to the value of the magnification factor $\underline{M}$. Therefore, a projector without a function for indicating the value of the magnification factor M may be employed, in place of the projector 15.

According to the preferred embodiment, only a desired region on the original is scanned, and a time required for scanning the image of the original can be saved. The data transmission time in the image scanner is also saved. Therefore, the availability of the image scanner is improved. The control unit in the image scanner may not comprise an image data memory having large storage capacity, since only the image data of the scan region $S_{20}$ is obtained through the image scanning. In other words, the image data memory can storage image data with respect to many originals. After an original is once set in the original holder, it is not removed from the original holder until the image scanning is completed, so that the original is not damaged. The handling of the original is easy, since the original is held in the original holder without being exposed to the exterior of the original holder. The setup process can be attained even by an operator not skilled in the setup work, and an error in the setup process can be prevented. Further, the original holder can be used repeatedly for different originals, and it is quite economical.

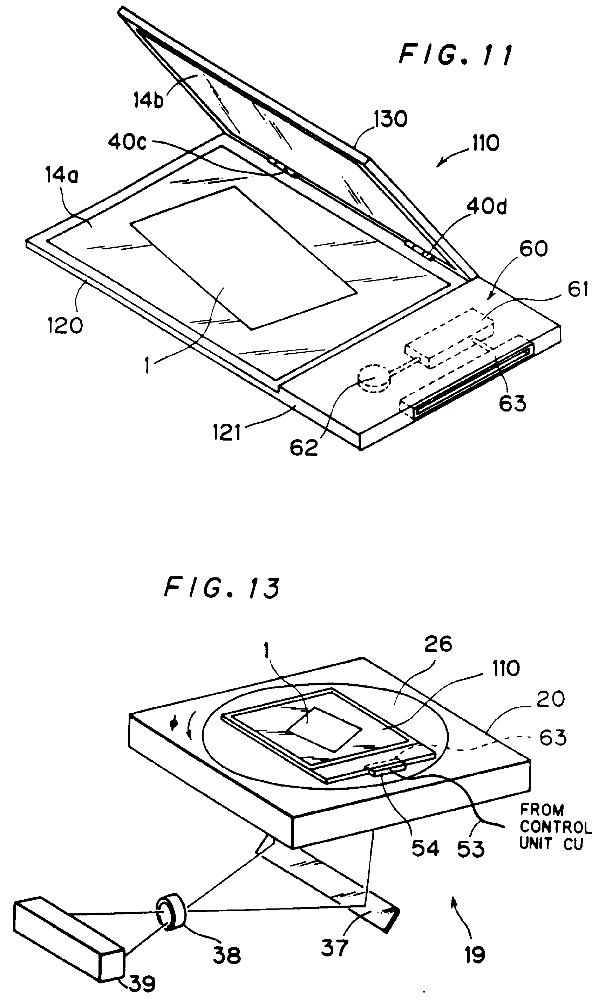

Fig. 11 shows an original holder 110 according to another embodiment of the present invention. The original holder 110 has frames 120 and 130 connected with each other through hinges 40c and 40d so that the frames 120 and 130 may be opened and closed around the hinges 40c and 40d. Transparent plates 14a and 14b are provided in the frames 120 and 130, respectively, similarly to the first embodiment. An original 1 is put on the transparent plate 14a, and holded between the transparent plates 14a and 14b by closing the frames 14a and 14b.

A cassette 121 is mounted on the side edge of the frame 120 to be integrated with the same. In the cassette 121, a data storage device 60 having a memory 61, a battery 62 and a connector 63 is provided. The memory 61 is semiconductor RAM, to which an electric power is supplied from the battery 62. The connector 63 is electrically coupled with the memory 61 so that the memory 61 can communicate with the exterior of the original holder 110 through the connector 63. The connector 63 may be a pin connector whose connection face or connection mouth is exposed on the side edge of the cassette 121. When the memory 61 is a volatile memory such as an EEPROM, the battery 62 may be omitted.

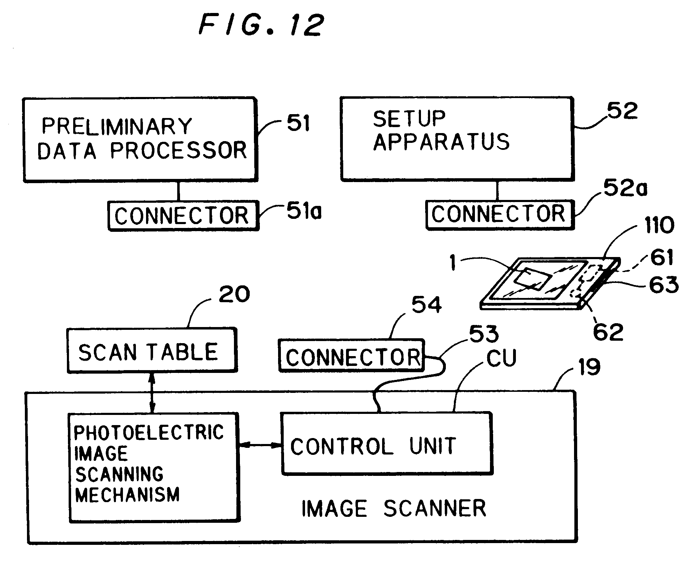

Before setting the original holder 110 in the image scanner, the original holder 110 is carried to a preliminary data processor 51 (Fig. 12) and a setup apparatus 52, in serial. The preliminary data processor 51 and the setup apparatus 52 have connectors 51a and 52a, respectively, each of which fits the connector 63 in the original holder 110. After the original holder 110 is electrically connected with the preliminary data processor 51 through the coupling of the connectors 63 and 51a, a data prepared in the preliminary data processor 51 is delivered from the preliminary data processer 51 to the memory 61 through the connector coupling, to be stored in the memory 61. Then, the original holder 110 is disconnected from the preliminary data processor 51, and electrically connected with the setup apparatus 52 through the coupling of the connectors 63 and 52b, whereby another data prepared in the setup apparatus 52 is transmitted to and stored in the memory 61. There data delivered from the preliminary data processor 51 and the setup apparatus and stored in the memory 61 are scan data required for scanning the image of the original 1 and separating the image data into color components, which are generated in the processor 51 and the apparatus 52 on the basis of the image of the original 1 and a scanning plan prepared by the operator. The scan data may have the following data:

(I) Original disclimination data, such as an original number, the title of an original, and the like;

(II) Trimming coordinate data representing the position of a desired scan region on the original 1 in a coordinate system defined on the original holder 110;

(III) Data representing an angle, by which the rotary table 26 is to be rotated so that the edges of the scan region are parallel with the scanning directions;

(IV) Data representing the value of the magnification factor determined according to a layout of the image on the image recording film;

(V) The coordinate data with respect to highlight and shadow points selected on the original 1;

(VI) Color separation data indicating:

(i) the respective optical densities of the highlight and shadow points.

(ii) the respective halftone dot area rate at the highlight and shadow points,

(iii) the degree of sharpness enhancement,

(iv) the gradation curve,

(v) the respective quantities of UCR and GCR,

(vi) the color correction character, and

(vii) the output mode indicating a number of record images in a recording unit in which a plurality of color component images are recorded in parallel;

(VII) Halftone dot condition data indicating:

(i) the screen ruling,

(ii) the screen angle, and

(iii) the shape of the halftone dot, such as a square dot, a chain dot; and

(VIII) Data representing a history of data arrangement, such as:

(i) the date and the time at which the scan data is corrected, and

(ii) the date and the time when the original 1 is reproducted.

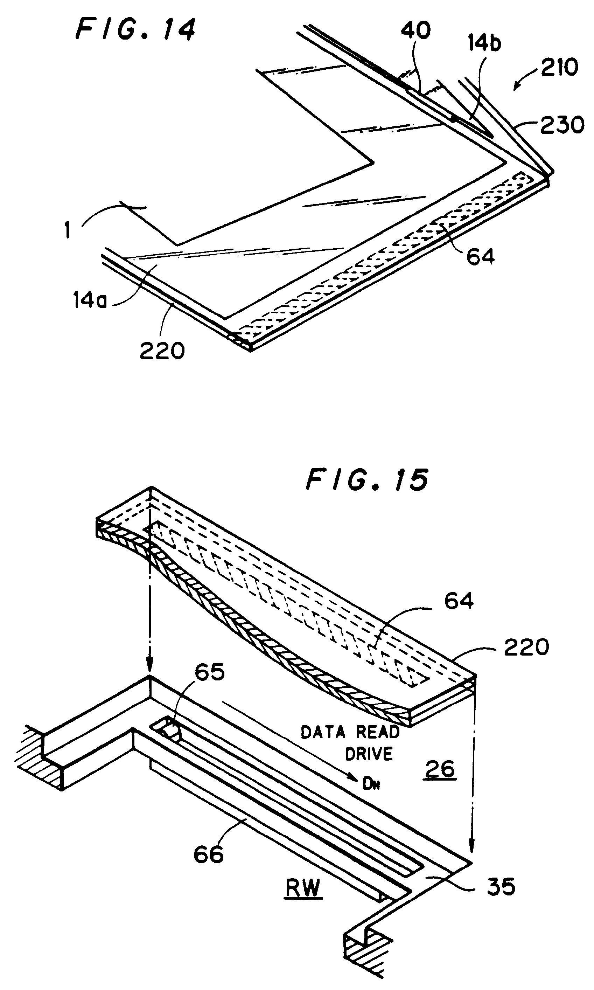

After the storage operation, the original holder 110 being disconnected from the setup apparatus 52 is carried to the image scanner 19, to be set on the rotary table 26, as shown Fig. 13. The image scanner 19 has a signal line 53 connected to the control unit CU. A connector 54 capable to fit the connector 63 in the original holder 110 is provided a the end of the signal line 53. After the connectors 54 and 63 are coupled with each other, the control unit CU shown starts to fetch the scan data from the memory 63 through the coupling of the connectors 63 and 54 and the signal line 53, so that the scan data is automatically set in the control unit CU.

After disconnecting the connector 54 from the connector 63, the rotary table 26 is rotated by the angle $\phi$ similarly to the first embodiment, and then, the image on the scan region in the original 1 is scanned. The image data thus obtained is processed in the control unit CU, and delivered to a recording unit or another image processors. The image scanning and the image data processing are conducted under the condition indicated by the scan data.

Fig. 14 is a partial view of an original holder 210 according to further another embodiment of the present invention. Similarly to the original holders 11 and 110, the original holder 210 is provided with a pair of frames 220 and 230 connected with each other through a hinge 40 a pair of hinges 40 one of which is shown in Fig. 14. Transparent plates 14a and 14b are fixed in the frames 220 and 230, respectively. On the lower edge surface of the lower frame 220, a magnetic tape 64 is fixed along the edge of the frame 220. Each of the preliminary data processor and the setup apparatus is so constructed as to have a magnetic head for recording the scan data on the magnetic tape 64, in place of the pin connector 51a, 51b. Preferably, the magnetic head is also operable to read a data already stored in the magnetic tape 64. The original holder 210 holding the original 1 is carried to the preliminary data processor and the setup apparatus, in serial. The scan data are recorded on the magnetic tape 64 through the magnetic heads from the preliminary data processor and the setup apparatus.

The image scanner 19 is provided with a magnetic head for reading the scan data from the magnetic tape 64, in place of the connector 53a. As shown in Fig. 15, the magnetic head 65 and a driving device 66 for driving the magnetic head 65 in the direction $D_H$ are provided in the step member 35 in the rotary table 26 so that the magnetic head 65 can scan the surface of the magnetic tape 64 when the original holder 210 is set in the rectangular window RW in the rotary table 26.

The scan data read with the magnetic head 65 is fetched to the control unit CU, to be referred in the image scanning of the original 1. Preferably, the magnetic head 65 is operable to record a data on the magnetic tape 54 so that the scan data on the magnetic tape 54 can be corrected, if necessary.

In the original holders 110 and 210, when a plurality of originals is held in the original holder 110 or 210, the respective scan data as to the originals may be recorded in the memory 61 or the magnetic tape 64.

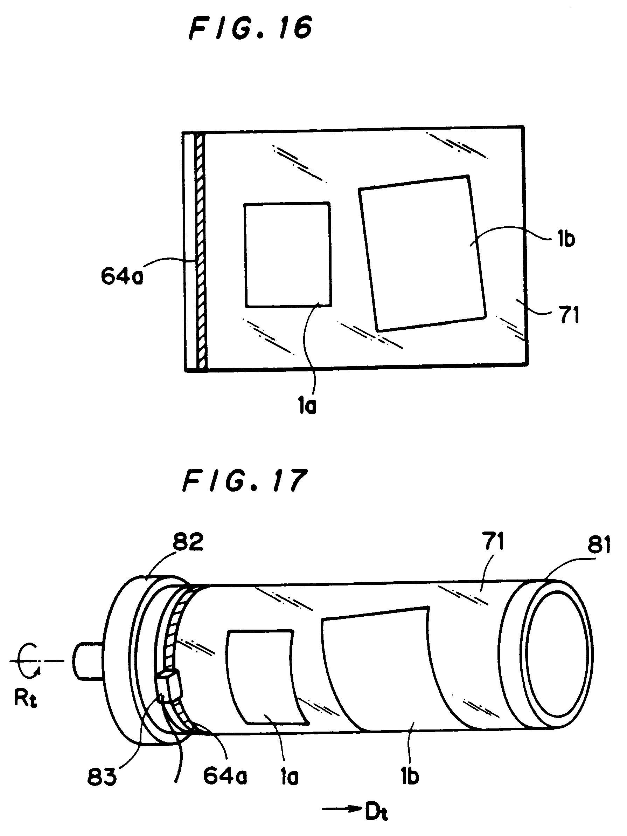

The present invention may be applied to a drum type scanner. In such a case, originals 1a and 1b shown in Fig. 16 are pasted on a transparent base sheet 71 provided with a magnetic tape 64a. On the magnetic tape 64a, a scan data is recorded with the preliminary data processor and the setup apparatus. The magnetic tape 64a is fixed on the edge surface of the base sheet 71 along the side edge thereof. The base sheet 71 is wound on a plastic transparent drum 81 as shown in Fig. 17, so that the magnetic tape 64a partially or fully surround the drum 81 along the circular direction $R_t$. The drum 81 supported with a flange 82 is rotated in the direction $R_t$, and the scan data is read with a magnetic head 83 fixed in the body of a drum type scanner, to be used for controlling the image scanning and image data processing. Image scanning process itself is attained by rotating the drum 81 while reading the prespective images of originals 1a and 1b with a pickup head (not shown) being moved to the direction $D_t$.

When the originals 1a and 1b are set on the surface of the drum 81 without the base sheet 71, the magnetic tape 64a may be fixed on the flange 82 or an edge part of the drum 81 to partially or fully surround the same.

According to the preferred embodiments shown in Fig. 12 through Fig. 18, the scan data are stored in the memory or the magnetic tape provided in the original holder, and therefore, it can be prevented that scan data to an original is mistaken for that to another original. Management of the scan data is easy, since the scan data and the original are paired in the original holder. Further, the transmission of the original data from the preliminary data processor and the setup apparatus to the image scanner can be attained without complex process or a high-priced transmission apparatus.

The present invention may be applied to a monochrome process scanner, and other image scanner employed for scanning an image of an original to read the same.

Although the present invention has been described and illustrated in detail, it is clearly understood that the same is by way of illustration and example only and is not to be taken by way of limitation, the scope of the present invention being limited only by the terms of the appended claims.

The features disclosed in the foregoing description, in the claims and/or in the accompanying drawings may, both separately and in any combination thereof, be material for realising the invention in diverse forms thereof.

## Claims

1. A method of setting an original (1) in an image scanner (19) for reading an image of a desired area (43) on said original (1) through an image scanning process, said method comprising the steps of:

   a) preparing an original holder (11) provided with a reference mark (42) and capable of holding said original (1),

   b) setting said original (1) in said original holder (11), so that said original (1) is held by said original holder (11),

   c) projecting an image of said original (1) held in said original holder (11) on a sheet member (18) with an image projector (10), wherein an image of said reference mark (42) is also projected with said image projector (10) on said sheet member (18) to give a projected reference mark,

   d) observing respective images of said original (1) and said reference mark (42) projected on said sheet member (18), to specify a rectangular region ($S_2$) including said desired area (43) in said original (1) according to a predetermined scanning plan with respect to said original (1),

e) generating a reference data signal indicating a location and an incline angle of said rectangular region ($S_2$) in said original holder (11), through the steps of:

(e-1) specifying a rectangular region ($S_{20}$) on said sheet member (18) which includes a projected image of said original (1), and

(e-2) finding a positional relationship between said rectangular region ($S_{20}$) on said sheet member (18) and said projected reference mark (42) to obtain said reference data signal,

(f) setting said original holder (11) holding said original (1) into said image scanner (19), wherein a spatial relationship between said original holder (11) and said image scanner (19) is so adjusted with reference to said reference data signal that a side of said rectangular region ($S_2$) is parallel to a scanning direction in said image scanner (19), and

g) delivering said reference data signal to said image scanner (19) so that only said rectangular region ($S_2$) on said original (1) is scanned with said image scanner (19).

2. A method in accordance with claim 1, characterized in that said image projector (10) projects respective images of said original (1) and said reference mark (42) on said sheet member (18) while magnifying said respective images, and

said reference data signal is obtained through the step of transforming a data signal expressing said positional relationship between said rectangular region ($S_{20}$) on said sheet member (18) and said projected reference mark (42) on the basis of a value of a magnification factor at which said projector (10) projects said respective images on said sheet member (18).

3. A method in accordance with claim 1 or 2, characterized in that said image scanner (19) is provided for reading said image of said desired area (43) to obtain an image data signal which is to be delivered to a image recorder,

said image recorder is operable to record an image expressed by said image data signal on a recording medium,

said sheet member (18) is a layout sheet on which a location of said image of said desired area (43) on said recording medium is indicated, said rectangular region ($S_{20}$) on said sheet member (18) having a side parallel to an edge line of said layout sheet, and

said reference data signal representing coordinates of an apex of said rectangular region ($S_2$) in said original (1) in a coordinate system defined on said original holder (11), and

a second reference data signal representing said incline angle at which said rectangular region ($S_2$) in said original (1) is inclined from a reference direction on said original holder (11) indicated by said reference mark (42).

4. An image scanning system for reading an image of an original, comprising:

(a) an original holder (11) for holding an original (1), comprising:

(a-1) first and second frame members (12, 13) connected with each other through a hinge means (40) at respective edges of said first and second frame members (12, 13),

(a-2) transparent plate members (14) provided in windows (w) surrounded by said first and second frame members (12, 13), respectively, wherein said original (1) is held between said transparent plate members (14), and

(a-3) a projectable reference mark (42) provided in said first and second frame members (12, 13) or said transparent plate members (14),

(b) an image projector means (10) comprising:

(b-1) light source means (15) for generating a light toward said original holder (11) holding said original (1), and

(b-2) a projection plane means (18) on which respective images of said original (1) and said reference mark (42) are projected,

wherein said image projector (10) is employed for observing said respective images of said original (1) and said reference mark (42) on said projection plane means (18) to generate a reference data signal indicating positional and angular relation between said reference mark means (42) and said original (1) held in said original holder (11), and

(c) an image scanner (19) comprising:

(c-1) table means (20) capable of accepting thereon said original holder (11) holding said original (1) carried from said image projector (10),

(c-2) means (2) for inputting said reference data signal; and

(c-3) image reader means (39) for reading an image of said original (1) held in said original holder (11) placed on said table means (20), wherein an area (43) of said image of said original (1) read by said image reader means (39) is determined as a function of said reference data signal.

5. An image scanning system of claim 4, characterized in that said table means (20) comprises:
(c-1-1) a hollow member having a window (w), and
(c-1-2) a rotary table (26) which is so mounted in said window (w) as to rotate around a center of said rotary table (26), said window (w) having a shape corresponding to the shape of said original holder (11) holding said original (1), whereby said original (1) held in said original holder (11) can be set into said window (w) and rotated with said rotary table (26).

6. An image scanning system of claim 5, characterized in that said table means (20) further comprises:
(c-1-3) a rotary drive mechanism (29) provided in said hollow box member for rotating said rotary table (26) with a motor (30), and
(c-1-4-) an angle detector (32) provided in said hollow box member for detecting a rotation angle of said rotary table (26) from a predetermined direction defined on said hollow box member.

7. An image scanning system of claim 5 or 6, characterized in that
angular indexes (33) are marked on said scan table (20) around said window (w), and
an indication mark (34) is provided on an edge of said rotary table (26), whereby a rotation angle of said rotary table (26) can be found by observing what angular index within said angular indexes (33) is indicated by said indication mark (34).

**Patentansprüche**

1. Ein Verfahren zur Positionierung einer Vorlage in einem Bildabtaster (19) zum Lesen eines Bildes eines gewünschten Bereichs (43) auf der Vorlage (1) durch einen Bildabtastvorgang, wobei das Verfahren die folgenden Schritte aufweist:
(a) Vorbereiten eines Vorlagehalters (11), der mit einer Bezugsmarkierung (42) versehen ist und die Vorlage (1) halten kann,
(b) Positionieren der Vorlage (1) in dem Vorlagehalter (11) derart, daß die Vorlage (1) von dem Vorlagehalter (11) gehalten wird,
(c) Projizieren eines Bildes der Vorlage (1), die in dem Vorlagehalter (11) gehalten wird, auf ein Blattelement (18) mittels eines Bildprojektors (10), wobei auch ein Bild der Bezugsmarkierung (42) mit dem Bildprojektor (10) auf das Blattelement projiziert wird, um eine projizierte Bezugsmarkierung zu geben,
(d) Beobachten der jeweiligen Bilder der Vorlage (1) und der Bezugsmarke (42), die auf das Blattelement (18) projiziert sind, um einen rechteckigen Bereich ($S_2$) einschließlich des gewünschten Bereichs (43) in der Vorlage (1) entsprechend einem vorgegebenen Abtastplan bezüglich der Vorlage (1) zu spezifizieren,
(e) Erzeugen eines Bezugsdatensignals, das einen Ort und einen Neigungswinkel des rechteckigen Bereichs ($S_2$) in dem Vorlagehalter (11) angibt, anhand der folgenden Schritte:
(e-1) Spezifizieren eines rechteckigen Bereichs ($S_{20}$) auf dem Blattelement (18), der ein projiziertes Bild der Vorlage (1) beinhaltet, und
(e-2) Finden einer Positionsbeziehung zwischen dem rechteckigen Bereich ($S_{20}$) auf dem Blattelement (18) und der projizierten Bezugsmarkierung (42), um das Bezugsdatensignal zu gewinnen,
(f) Positionieren des die Vorlage (1) haltenden Vorlagehalters (11) in dem Bildabtaster (19), wobei eine räumliche Beziehung zwischen dem Vorlagehalter (11) und dem Bildabtaster (19) bezüglich dem Bezugsdatensignal derart eingestellt ist, daß eine Seite des rechteckigen Bereichs ($S_2$) parallel zu einer Abtastrichtung in dem Bildabtaster (19) ist, und
(g) Liefern des Bezugsdatensignals zu dem Bildabtaster (19) derart, daß nur der rechteckige Bereich ($S_2$) der Vorlage (1) mittels des Bildabtasters (19) abgetastet wird.

2. Ein Verfahren nach Anspruch 1, dadurch gekennzeichnet, daß der Bildprojektor (10) jeweilige Bilder der Vorlagen (1) und der Bezugsmarke (42) auf das Blattelement (19) projiziert, wobei die jeweiligen Bilder vergrößert werden, und
das Bezugsdatensignal während des Schritts des Umwandelns eines Datensignals, welches die positionelle Beziehung zwischen dem rechteckigen Bereich ($S_{20}$) auf dem Blattelement (18) und der projizierten Bezugsmarke (42) angibt, auf der Basis eines Wertes eines Vergrößerungsfaktors, mit dem der Projektor (10) die jeweiligen Bilder auf das Blattelement (18) projiziert, gewonnen wird.

3. Ein Verfahren nach Anspruch 1 oder 2, dadurch gekennzeichnet, daß der Bildabtaster (19) zum Lesen des Bildes des gewünschten Bereiches (43) vorgesehen ist, um ein Bilddatensignal zu gewinnen, das zu einem Bildaufzeichnungsgerät zu liefern ist,

das Bildaufzeichnungsgerät dazu geeignet ist, auf ein Aufzeichnungsmedium ein Bild aufzuzeichnen, das durch das Bilddatensignal ausgedrückt wird,

das Blattelement (18) ein Layoutblatt ist, auf welches ein Ort des Bildes des gewünschten Bereiches (43) auf dem Aufzeichnungsmedium angegeben ist, der rechteckige Bereich ($S_{20}$) auf dem Blattelement (18) eine Seite hat, die parallel zu einer Randlinie des Layoutblatts ist, und

das Bezugsdatensignal Koordinaten einer Ecke eines rechteckigen Bereichs ($S_2$) der Vorlage (1) in einem Koordinatensystem, das auf dem Vorlagehalter (11) definiert ist, darstellt, und

ein zweites Bezugsdatensignal, welches einen Neigungswinkel, unter dem der rechteckige Bereich ($S_2$) der Vorlage (1) repräsentiert, gegenüber einer Bezugsrichtung auf dem Vorlagehalter (11), welche durch die Bezugsmarke (42) angegeben ist, geneigt ist, geschaffen wird.

4. Ein Bildabtastsystem zum Lesen eines Bildes einer Vorlage, mit:

(a) einem Vorlagehalter (11) zum Halten einer Vorlage (1), mit:

(a-1) ersten und zweiten Rahmenelementen (12, 13), die miteinander über Gelenkmittel (40) mit den jeweiligen Rändern der ersten und zweiten Rahmenelemente (12, 13) verbunden sind,

(a-2) transparenten Plattenelemente (14), die in Fenstern (w), welche von den ersten und zweiten Rahmenelementen (12, 13) umgeben sind, versehen sind, wobei die Vorlage (1) zwischen den transparenten Plattenelementen (14) gehalten sind, und

(a-3) einer projizierbare Referenzmarkierung (42), die in den ersten und zweiten Rahmenelementen (12, 13) oder den transparenten Plattenelementen (14) vorgesehen ist,

(b) einem Bildprojektor (10), mit:

(b-1) einer Lichtquelle (15) zum Erzeugen eines auf den Vorlagehalter (11), der die Vorlage (1) hält, gerichteten Lichts, und

(b-2) einer Projektionsebene (18), auf die die jeweiligen Bilder der Vorlage (1) und der Bezugsmarkierung (42) projiziert sind,

wobei der Bildprojektor (10) zum Beobachten der jeweiligen Bilder der Vorlage (1) und der Bezugsmarkierung (42) auf der Projektionsebene (18) verwendet wird, um ein Referenzdatensignal zu erzeugen, das die Positions- und Winkelbeziehung zwischen der Bezugsmarkierung (42) und der von dem Vorlagehalter (11) gehaltenen Vorlage (1) angibt, und

(c) einem Bildabtaster (19) mit:

(c-1) einem Tisch (20), der dazu in der Lage ist, den Vorlagehalter (11), welcher die Vorlage (1), die von dem Bildprojektor (10) gehalten wird, aufzunehmen,

(c-2) Mitteln (2) zum Eingeben des Bezugsdatensignals, und

(c-3) einem Bildleser (39) zum Lesen eines Bildes der Vorlage (1), die in dem auf dem Tisch (20) aufgebrachten Vorlagehalter (1) gehalten wird, wobei ein Bereich (43) des Bildes der Vorlage (1), die von dem Bildleser (39) gelesen wird, als eine Funktion des Bezugsdatensignals bestimmt ist.

5. Ein Bildabtastsystem nach Anspruch 4, dadurch gekennzeichnet, daß der Tisch (20) aufweist:

(c-1-1) ein hohles, mit einem Fenster (w) versehenes Element, und

(c-1-2) einen Drehtisch (26), der derart in dem Fenster (w) montiert ist, daß er sich um eine Mitte des Drehtisches (26) dreht, wobei das Fenster (w) eine Form hat, die der Form des die Vorlage (1) haltenden Vorlagenhalters entspricht, wodurch die von dem Vorlagehalter (11) gehaltene Vorlage (1) in das Fenster (w) eingesetzt und mit dem Drehtisch (26) gedreht werden kann.

6. Ein Bildabtastsystem nach Anspruch 5, dadurch gekennzeichnet, daß der Tisch (20) weiter aufweist:

(c-1-3) einen Drehantriebsmechanismus (29), der in dem hohlen Tastenelement zum Drehen des Drehtisches (26) mittels eines Motors (30) vorgesehen ist, und

(c-1-4) einen Winkeldetektor (32), der in dem hohlen Kastenelement zum Erkennen eines Drehwinkels des Drehtisches (26) von einer vorgegebenen Richtung, die durch das hohle Kastenelement definiert ist, vorgesehen ist.

7. Ein Bildabtastsystem nach Anspruch 5 oder 6, dadurch gekennzeichnet, daß

Winkelindizes (33) auf dem Abtasttisch (20) um das Fenster (w) markiert sind, und
eine Indikationsmarkierung (34) an einem Rand des Drehtisches (26) vorgesehen ist, wodurch ein Drehwinkel des Drehtisches (26) durch Beobachten, welcher Winkelindex aus den Winkelindizes (33) durch
die Indikationsmarkierung (34) angegeben wird, gefunden werden kann.

## Revendications

1. Procédé pour placer un original (1) dans un appareil de balayage d'image (19) pour lire une image d'une zone souhaitée (43) sur ledit original (1) grâce à un procédé de balayage d'image, ledit procédé comprenant les étapes de :

   a) préparation d'un support d'original (11) pourvu d'un repère de référence (42) et capable de supporter ledit original (1),

   b) placement dudit original dans ledit support d'original (11), de sorte que ledit original (1) est supporté par ledit support d'original (11),

   c) projection d'une image dudit original (1) supportée par ledit support d'original (11) sur un élément feuille (18) au moyen d'un projecteur d'image (10), dans lequel une image dudit repère de référence (42) est également projetée par ledit projecteur d'image (10) sur ledit élément feuille (18) pour obtenir une marque de référence projetée,

   d) observation des images correspondantes dudit original (1) et dudit repère de référence (42) projetées sur ledit élément feuille (18), pour déterminer une région rectangulaire ($S_2$) comprenant ladite zone sou-haitée (43) dans ledit original (1) selon un plan de balayage établi concernant ledit original (1),

   e) production d'un signal de données de référence indiquant un emplacement et un angle de pente de ladite région rectangulaire ($S_2$) dans ledit support d'original (11), grâce aux étapes de :

      (e-1) détermination d'une région rectangulaire ($S_{20}$) sur ledit élément feuille (18) qui comprend une image projetée dudit original (1), et

      (e-2) recherche d'un rapport de position entre ladite région rectangulaire ($S_{20}$) sur ledit élément feuil-le (18) et ledit repère de référence projetée (42) pour obtenir ledit signal de données de référence,

   f) installation dudit support d'original (11) supportant ledit original (1) dans ledit appareil de balayage d'image (19), dans lequel un rapport dans l'espace entre ledit support d'original (11) et ledit appareil de balayage d'image (19) est réglé en référence audit signal de données de référence de sorte qu'un côté de ladite région rectangulaire ($S_2$) est parallèle à une direction de balayage dans ledit appareil de balayage d'image (19), et

   g) fourniture dudit signal de données de référence audit appareil de balayage d'image (19) de sorte que seulement ladite région rectangulaire ($S_2$) sur ledit original (1) est balayé par ledit appareil de balayage d'image (19).

2. Procédé selon la revendication 1, caractérisé en ce que ledit projecteur d'image (10) projette les images correspondantes dudit original (1) et dudit repère de référence (42) sur ledit élément feuille (18) tout en grossissant lesdites images correspondantes, et
en ce que ledit signal de données de référence est obtenu grâce à l'étape de transformation d'un signal de données exprimant ledit rapport de position entre ladite région rectangulaire ($S_{20}$) sur ledit élément feuille (18) et ledit repère de référence projetée (42) fondés sur une valeur du facteur de grossissement avec lequel ledit projecteur (10) projette lesdites images respectives sur ledit élément feuille (18).

3. Procédé selon la revendication 1 ou 2, caractérisé en ce que ledit appareil de balayage d'image (19) est prévu pour lire ladite image de ladite zone souhaitée (43) afin d'obtenir un signal de données d'image qui va être fourni à un enregistreur d'image,
en ce que ledit enregistreur d'image peut fonctionner pour enregistrer une image exprimée par ledit signal de données d'image sur un moyen d'enregistrement,
en ce que ledit élément feuille (18) est une feuille dessinée sur laquelle un emplacement de ladite image de ladite zone souhaitée (43) sur ledit moyen d'enregistrement est indiqué, ladite région rectangulaire ($S_{20}$) sur ledit élément feuille (18) ayant un côté parallèle à une bordure de ladite feuille dessinée, et
en ce que ledit signal de données de référence représente les coordonnées d'un angle de pente de ladite région rectangulaire ($S_2$) dans ledit original (1) dans un système de coordonnées définies sur ledit support d'original (11), et
en ce qu'un second signal de données de référence représentant ledit angle de pente duquel ladite région rectangulaire ($S_2$) dans ledit original (1) est inclinée par rapport à une direction de référence sur ledit support d'original (11) est indiqué par ledit repère de référence (42).

4. Dispositif de balayage d'image pour lire une image d'un original, comprenant :
   (a) un support d'original (11) pour supporter un original (1), comprenant :
   (a-1) un premier et un second éléments cadres (12, 13) reliés l'un à l'autre par l'intermédiaire d'un moyen formant charnière (14) au niveau des bordures correspondantes desdits premier et second éléments cadres (12, 13),
   (a-2) des éléments plaques transparentes (14) pourvus de fenêtres (W) entourés respectivement par ledit premier et ledit second éléments cadres (12, 13) , dans lesquels ledit original (1) est supporté entre lesdits éléments plaques transparentes (14), et
   (a-3) un repère de référence projetable (42) disposé dans lesdits premier et second éléments cadres (12, 13) desdits éléments plaques transparentes (14),
   (b) un moyen projecteur d'image (10) comprenant :
   (b-1) un moyen formant source lumineuse (15) pour produire un rayon lumière dirigé vers ledit support d'original (11) supportant ledit original (1), et
   (b-2) un moyen formant plan de projection (18) sur lequel les images correspondantes dudit original (1) et dudit repère de référence (42) sont projetées,
   dans lequel ledit projecteur d'image (10) est utilisé pour observer lesdites images correspondantes dudit original (1) et dudit repère de référence (42) sur ledit moyen formant plan de projection (18) pour produire un signal de données de référence indiquant le rapport de position et d'angle entre ledit moyen formant marque de référence (42) et ledit original (1) supporté dans ledit support d'original (11), et
   (c) un appareil de balayage d'image (19) comprenant
   (c-1) un moyen formant table (20) capable de recevoir ledit support d'original (11) supportant ledit original (1) provenant dudit projecteur d'image (10),
   (c-2) un moyen (2) destiné à l'entrée du signal de données de référence; et
   (c-3) un moyen formant lecteur d'image (39) pour lire une image dudit original (1) supporté dans ledit support d'original (11) placé sur ledit moyen formant table (20), dans lequel une zone (43) de ladite image dudit original (1) lue par ledit moyen formant lecteur d'image (39) est déterminée comme une fonction dudit signal de données de référence.

5. Dispositif de balayage d'image selon la revendication 4, caractérisé en ce que ledit moyen formant table (20) comprend :
   (c-1-1) un élément creux comportant une fenêtre (W), et
   (c-1-2) une table tournante (26) qui est montée dans ladite fenêtre (W) de manière à tourner autour du centre de ladite table tournante (26), ladite fenêtre (W) ayant une forme correspondant à la forme dudit support d'original (11) supportant ledit original (1), ce par quoi ledit original (1) supporté dans ledit support d'original (11) peut être placé dans ladite fenêtre (W) et être mis en rotation par ladite table tournante (26).

6. Dispositif de balayage d'image selon la revendication 5, caractérisé en ce que le moyen formant table (20) comprend en outre :
   (c-1-3) un mécanisme d'entraînement en rotation (29) prévu dans ledit élément boîte creuse pour faire tourner ladite table tournante (26) au moyen d'un moteur (30), et
   (c-1-4) un détecteur d'angle (32) prévu dans ledit élément boîte creuse pour détecter un angle de rotation de ladite table tournante (26) à partir d'une direction prédéterminée définie sur ledit élément boîte creuse.

7. Dispositif de balayage d'image selon la revendication 5 ou 6, caractérisé en ce que
   des index angulaires (33) sont repérés sur ladite table de balayage (20) autour de ladite fenêtre (W), et un repère d'indication (34) est prévu sur un bord de ladite table tournante (26), ce par quoi un angle de rotation de ladite table tournante (26) peut être constaté en observant quel index angulaire parmi lesdits index angulaires (33) est indiqué par ledit repère d'indication (34).

# FIG. 1

# F I G. 2

# FIG. 3

## F I G. 4A

```
         ┌─────────┐
         │  START  │
         └─────────┘
              │
  ┌──────────────────────────┐
  │ HOLD THE ORIGINAL IN THE │──301
  │ ORIGINAL HOLDER          │
  └──────────────────────────┘
              │
  ┌──────────────────────────┐
  │ PROJECT THE IMAGE OF THE │──302
  │ ORIGINAL ON THE LAYOUT SHEET │
  └──────────────────────────┘
              │
  ┌──────────────────────────┐
  │ FIT THE DESIRED IMAGE    │──303
  │ IN THE TRIMMING FRAME    │
  └──────────────────────────┘
              │
  ┌──────────────────────────┐
  │ DETECT THE COORDINATES   │──304
  │ (x₁,y₁) AND (x₂,y₂)      │
  └──────────────────────────┘
              │
  ┌──────────────────────────┐
  │ CALCULATE θ              │──305
  └──────────────────────────┘
              │
  ┌──────────────────────────┐
  │ DETECT THE COORDINATES   │──306
  │ (x₃,y₃) AND (x₄,y₄)      │
  └──────────────────────────┘
              │
  ┌──────────────────────────┐
  │ TRANSFORM (x₃,y₃) AND (x₄,y₄) │──307
  │ TO (X₃,Y₃) AND (X₄,Y₄)   │
  └──────────────────────────┘
              │
  ┌──────────────────────────┐
  │ CALCULATE φ              │──308
  └──────────────────────────┘
              │
              ▼
           ( 1 )
```

Step 304: DETECT THE COORDINATES $(x_1, y_1)$ AND $(x_2, y_2)$ — 304

Step 305: CALCULATE $\theta$ — 305

Step 306: DETECT THE COORDINATES $(x_3, y_3)$ AND $(x_4, y_4)$ — 306

Step 307: TRANSFORM $(x_3, y_3)$ AND $(x_4, y_4)$ TO $(X_3, Y_3)$ AND $(X_4, Y_4)$ — 307

Step 308: CALCULATE $\phi$ — 308

18

## F I G. 4B

```
           ( 1 )
```

SPECIFY THE RECTANGULAR
REGION $S_2$ — 309

FIND THE COORDINATES
$(X_9, Y_9)$ AND $(X_{10}, Y_{10})$ — 310

TRANSFORM $(X_9, Y_9)$ AND $(X_{10}, Y_{10})$
TO $(\alpha_9, \beta_9)$ AND $(\alpha_{10}, \beta_{10})$ — 311

CALCULATE THE COORDINATES
$(u_9, v_9)$ AND $(u_{10}, v_{10})$ — 312

DELIVER THE DATA $\phi$,
$(u_9, v_9)$ AND $(u_{10}, v_{10})$ TO
IMAGE SCANNER — 313

END

# FIG.5A

PROJECTION WITH
MAGNIFICATION FACTOR "M"

# FIG.5B

20

FIG.6

# FIG. 7

```
        ┌─────────┐
        │  START  │
        └────┬────┘
             │
   ┌─────────────────────────┐  401
   │ SET THE ORIGINAL HOLDER │
   │ IN THE WINDOW OF THE    │
   │ ROTARY TABLE            │
   └─────────────────────────┘
             │
   ┌─────────────────────────┐  402
   │ ROTATE THE ROTARY TABLE │
   │ TO THE ZERO ANGLE POINT │
   └─────────────────────────┘
             │
   ┌─────────────────────────┐  403
   │ ROTATE THE ROTARY TABLE │
   │ BY THE ANGLE (+φ)       │
   └─────────────────────────┘
             │
   ┌─────────────────────────┐  404
   │ CALCULATE (U₉,V₉) AND   │
   │ (U₁₀,V₁₀)               │
   └─────────────────────────┘
```

CALCULATE $(U_9, V_9)$ AND $(U_{10}, V_{10})$ — 404

SCAN THE IMAGE OF THE ORIGINAL IN THE RANGE OF: — 405

$U_9 \sim U_{10}$ (MAIN SCANNING)

$V_9 \sim V_{10}$ (SUBSCANNING)

PROCESS THE IMAGE DATA TO REPRODUCE THE IMAGE — 406

END

## FIG. 8

## FIG. 9

# FIG. 10

FIG. 11

FIG. 13

FIG. 12

FIG. 14

FIG. 15

DATA READ DRIVE

## F I G . 16

## F I G . 17